(19) Europäisches Patentamt
European Patent Office
Office européen des brevets

(11) **EP 3 373 552 A1**

(12) **EUROPEAN PATENT APPLICATION**

(43) Date of publication:
**12.09.2018 Bulletin 2018/37**

(51) Int Cl.:
**H04L 29/06** (2006.01)     *G06N 3/08* (2006.01)
**G06N 99/00** (2010.01)

(21) Application number: **18160277.2**

(22) Date of filing: **06.03.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **09.03.2017   US 201715454219**

(71) Applicant: **General Electric Company**
**Schenectady, NY 12345 (US)**

(72) Inventors:
• **YAN, Weizhong (NMN)**
  **Niskayuna, NY New York 12309 (US)**
• **ABBASZADEH, Masoud**
  **Niskayuna, NY New York 12309 (US)**
• **MESTHA, Lalit Keshav**
  **Niskayuna, NY New York 12309 (US)**

(74) Representative: **Fischer, Michael Maria et al**
**General Electric Technology GmbH**
**GE Corporate Intellectual Property**
**Brown Boveri Strasse 7**
**5400 Baden (CH)**

(54) **MULTI-MODAL, MULTI-DISCIPLINARY FEATURE DISCOVERY TO DETECT CYBER THREATS IN ELECTRIC POWER GRID**

(57)    According to some embodiments, a plurality of heterogeneous data source nodes 130 may each generate a series of data source node 130 values over time associated with operation of an electric power grid control system. An offline abnormal state detection model creation computer 140 may receive the series of data source node 130 values and perform a feature extraction process to generate an initial set of feature vectors. The model creation computer 140 may then perform feature selection with a multi-model, multi-disciplinary framework to generate a selected feature vector subset. According to some embodiments, feature dimensionality reduction may also be performed to generate the selected feature subset. At least one decision boundary may be automatically calculated and output for an abnormal state detection model 155 based on the selected feature vector subset.

*FIG. 1*

## Description

BACKGROUND

Electric power grids are increasingly connected to the Internet. As a result, control systems associated with electric power grids may be vulnerable to threats, such as cyber-attacks (*e.g.*, associated with a computer virus, malicious software, *etc.*), that could disrupt electric power generation and distribution, damage equipment, *etc.* Current methods of protection from this type of harm primarily consider threat detection in Information Technology ("IT," such as, computers that store, retrieve, transmit, manipulate data) and Operation Technology ("OT," such as direct monitoring devices and communication bus interfaces). Cyber-threats can still penetrate through these protection layers and reach the physical "domain." Such attacks can diminish the performance of a control system and may cause a total shut down or even catastrophic damage. Currently, Fault Detection Isolation and Accommodation ("FDIA") approaches only analyze sensor data, but a threat might occur in connection with other types of data source nodes. Also note that FDIA is limited only to naturally occurring faults in one sensor at a time. FDIA systems do not address multiple simultaneously occurring faults as they are normally due to malicious intent. It would therefore be desirable to protect an electric power grid from malicious intent such as cyber-attacks in an automatic and accurate manner.

SUMMARY

According to some embodiments, a plurality of heterogeneous data source nodes may each generate a series of data source node values over time associated with operation of an electric power grid control system. An offline abnormal state detection model creation computer may receive the series of data source node values and perform a feature extraction process to generate an initial set of feature vectors. The model creation computer may then perform feature selection with a multi-model, multi-disciplinary framework to generate a selected feature vector subset. At least one decision boundary may be automatically calculated and output for an abnormal state detection model based on the selected feature vector subset.

Some embodiments comprise: means for receiving, from a plurality of heterogeneous data source nodes, a series of data source node values over time associated with operation of an electric power grid control system; means for performing, by an offline abnormal state detection model creation computer, a feature extraction process to generate an initial set of feature vectors; means for performing feature selection with a multi-model, multi-disciplinary framework to generate a selected feature vector subset; and means for automatically calculating and outputting at least one decision boundary for an abnormal state detection model based on the selected feature vector subset.

Some technical advantages of some embodiments disclosed herein are improved systems and methods to protect an electric power grid from malicious intent such as cyber-attacks in an automatic and accurate manner.

BRIEF DESCRIPTION OF THE DRAWINGS

FIG. 1 is a high-level block diagram of a system that may be provided in accordance with some embodiments.

FIG. 2 is a method according to some embodiments.

FIG. 3 is threat alert system in accordance with some embodiments.

FIG. 4 illustrates boundaries and a feature vector for an electric power grid parameter according to some embodiments.

FIG. 5 is an offline and real-time anomaly decision and early warning tool architecture according to some embodiments.

FIG. 6 is an offline anomaly decision boundary tool in accordance with some embodiments.

FIG. 7 illustrates a real-time decision, event/threat assessment, and early warning system according to some embodiments.

FIG. 8 is a feature vector information flow diagram in accordance with some embodiments.

FIG. 9 is a method for creating a selected feature subset according to some embodiments.

FIG. 10 illustrates a system to create a decision boundary in accordance with some embodiments.

FIG. 11 is a block diagram of an electric power grid protection platform according to some embodiments of the present invention.

FIG. 12 is a tabular portion of a power grid database in accordance with some embodiments.

FIG. 13 is a tabular portion of data source database in accordance with some embodiments.

FIG. 14 is a tabular portion of an alert database according to some embodiments.

FIG. 15 is a display according to some embodiments.

DETAILED DESCRIPTION

In the following detailed description, numerous specific details are set forth in order to provide a thorough understanding of embodiments. However it will be understood by those of ordinary skill in the art that the embodiments may be practiced without these specific details. In other instances, well-known methods, procedures, components and circuits have not been described in detail so as not to obscure the embodiments.

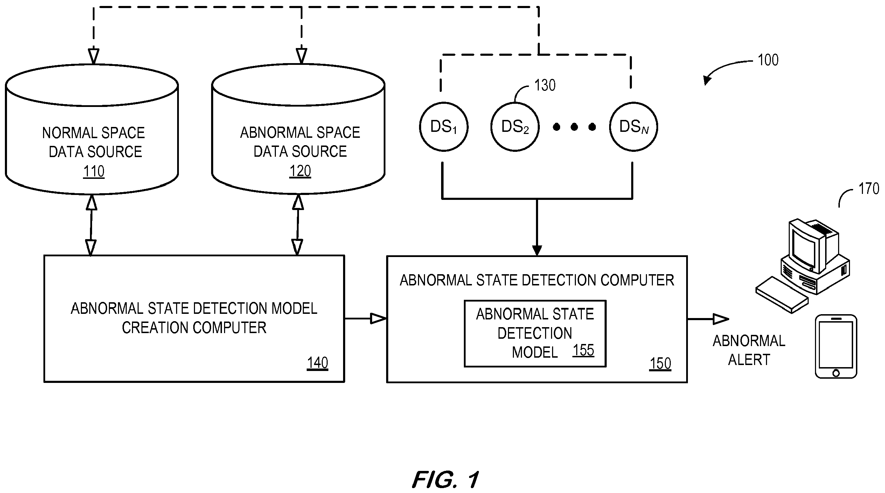

Electric power grid control systems that operate physical systems are increasingly connected to the Internet. As a result, these control systems may be vulnerable to threats and, in some cases, multiple attacks may occur simultaneously. Existing approaches to protect an electric power grid control system, such as FDIA approaches, might not adequately address these threats. It would therefore be desirable to protect an electric power grid from malicious intent such as cyber-attacks in an automatic and accurate manner. FIG. 1 is a high-level architecture of a system 100 in accordance with some embodiments. The system 100 may include a "normal space" data source 110 and an "abnormal space" data source 120. The normal space data source 110 might store, for each of a plurality of heterogeneous "data source nodes" 130 (shown in FIG. 1 as "DSi," "DS$_2$," ... "DS$_N$" for "1, 2, ... N" different data source nodes), a series of normal values over time that represent normal operation of an electric power grid (*e.g.*, generated by a model or collected from actual data source node 130 data as illustrated by the dashed line in FIG. 1). As used herein, the phrase "data source node" might refer to, for example, sensor data, signals sent to actuators, and auxiliary equipment, intermediary parameters that are not direct sensor signals, and/or control logical(s). These may represent, for example, threat data source nodes that receive data from the threat monitoring system in a continuous fashion in the form of continuous signals or streams of data or combinations thereof. Moreover, the nodes 130 may be used to monitor occurrences of cyber-threats or abnormal events. This data path may be designated specifically with encryptions or other protection mechanisms so that the information may be secured and cannot be tampered with via cyber-attacks. The abnormal space data source 120 might store, for each of the data source nodes 130, a series of abnormal values that represent an abnormal operation of the electric power grid (*e.g.*, when the system is experiencing a cyber-attack). According to some embodiments, the data source nodes 130 provide "heterogeneous" data. That is, the data may represent information from widely diverse areas, such as social media data, wireless network data (*e.g.*, Wi-Fi data), weather data (*e.g.*, temperature data, National Oceanic and Atmospheric Administration ("NOAA") information, *etc.*), IT inputs, *etc.*

Information from the normal space data source 110 and the abnormal space data source 120 may be provided to an offline abnormal state detection model creation computer 140 that uses this data to create a decision boundary (that is, a boundary that separates normal behavior from abnormal behavior). The decision boundary may then be used by an abnormal state detection computer 150 executing an abnormal state detection model 155. The abnormal state detection model 155 may, for example, monitor streams of data from the data source nodes 130 comprising data from sensor nodes, actuator nodes, and/or any other critical data source nodes (*e.g.,* data source nodes DS$_1$ through DS$_N$), calculate at least one "feature" for each data source node based on the received data, and "automatically" output a threat alert signal to one or more remote monitoring devices 170 when appropriate (*e.g.*, for display to a user). According to some embodiments, a threat alert signal might be transmitted to a unit controller, a plant Human-Machine Interface ("HMI"), or to a customer via a number of different transmission methods. Note that one receiver of a threat alert signal might be a cloud database that correlates multiple attacks on a wide range of power grid assets. As used herein, the term "feature" may refer to, for example, mathematical characterizations of data. Examples of features as applied to data might include the maximum, minimum, mean, standard deviation, variance, range, current value, settling time, Fast Fourier Transform ("FFT") spectral components, linear and non-linear principal components, independent components, sparse coding features, deep learning features, *etc.* Moreover, term "automatically" may refer to, for example, actions that can be performed with little or no human intervention. According to some embodiments, information about a detected threat may be transmitted back to the electric power grid control system.

As used herein, devices, including those associated with the system 100 and any other device described herein, may exchange information via any communication network which may be one or more of a Local Area Network ("LAN"), a Metropolitan Area Network ("MAN"), a Wide Area Network ("WAN"), a proprietary network, a Public Switched Telephone Network ("PSTN"), a Wireless Application Protocol ("WAP") network, a Bluetooth network, a wireless LAN network, and/or an Internet Protocol ("IP") network such as the Internet, an intranet, or an extranet. Note that any devices described herein may communicate via one or more such communication networks.

The offline abnormal state detection model creation computer 140 may store information into and/or retrieve information from various data stores, such as the normal space data source 110 and/or the abnormal space data source 120. The various data sources may be locally stored or reside remote from the offline abnormal state detection model creation computer 140 (which might be associated with, for example, offline or online learning). Although a single offline abnormal state detection model creation computer 140 is shown in FIG. 1, any number of such devices may be included.

Moreover, various devices described herein might be combined according to embodiments of the present invention. For example, in some embodiments, the offline abnormal state detection model creation computer 140 and one or more data sources 110, 120 might comprise a single apparatus. The offline abnormal state detection model creation computer 140 functions may be performed by a constellation of networked apparatuses, in a distributed processing or cloud-based architecture.

A user may access the system 100 via one of the monitoring devices 170 (*e.g.*, a Personal Computer ("PC"), tablet, or smartphone) to view information about and/or manage threat information in accordance with any of the embodiments described herein. In some cases, an interactive graphical display interface may let a user define and/or adjust certain parameters (*e.g.*, abnormal state detection trigger levels) and/or provide or receive automatically generated recommendations or results from the offline abnormal state detection model creation computer 140 and/or abnormal state detection computer 150.

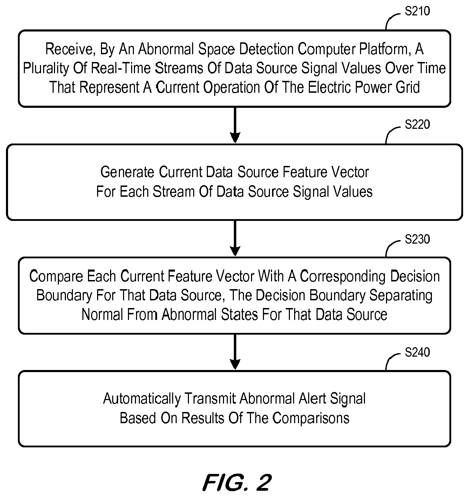

For example, FIG. 2 illustrates a method that might be performed by some or all of the elements of the system 100 described with respect to FIG. 1. The flow charts described herein do not imply a fixed order to the steps, and embodiments of the present invention may be practiced in any order that is practicable. Note that any of the methods described herein may be performed by hardware, software, or any combination of these approaches. For example, a computer-readable storage medium may store thereon instructions that when executed by a machine result in performance according to any of the embodiments described herein.

At S210, a plurality of real-time heterogeneous data source node signal inputs may receive streams of data source node signal values over time that represent a current operation of an electric power grid. At least one of the data source nodes (*e.g.*, controller nodes, *etc.*) may be associated with, for example, sensor data, an auxiliary equipment input signal, a control intermediary parameter, and/or a control logic value.

At S220, a real-time threat detection computer platform may receive the streams of data source node signal values and, for each stream of data source node signal values, generate a current data source node feature vector. According to some embodiments, at least one of the current data source node feature vectors is associated with principal components, statistical features, deep learning features, frequency domain features, time series analysis features, logical features, geographic or position based locations, and/or interaction features.

At S230, each generated current data source node feature vector may be compared to a corresponding decision boundary (*e.g.*, a linear boundary, non-linear boundary, multi-dimensional boundary, *etc.*) for that data source node in substantially real-time, the decision boundary separating a normal state from an abnormal state for that data source node. According to some embodiments, at least one data source node is associated with a plurality of multi-dimensional decision boundaries and the comparison at S230 is performed in connection with each of those boundaries. Note that a decision boundary might be generated, for example, in accordance with a feature-based learning algorithm and a high fidelity model or a normal operation of the electric power grid. Moreover, at least one decision boundary may exist in a multi-dimensional space and be associated with a dynamic model which is constructed using data obtained from design of experiments such as, a full factorial design, Taguchi screening design, a central composite methodology, a Box-Behnken methodology, and a real-world operating conditions methodology. In addition, an abnormal state detection model associated with a decision boundary might, according to some embodiments, be dynamically obtained and adapted based on a transient condition, a steady state model of the electric power grid, and/or data sets obtained while operating the system as in self-learning systems from incoming data stream.

At S240, the system may automatically transmit an abnormal alert signal (*e.g.*, a notification message, *etc.*) based on results of the comparisons performed at S230. The abnormal state might be associated with, for example, an actuator attack, a controller attack, a data source node attack, a plant state attack, spoofing, physical damage, unit availability, a unit trip, a loss of unit life, and/or asset damage requiring at least one new part. According to some embodiments, one or more response actions may be performed when an abnormal alert signal is transmitted. For example, the system might automatically shut down all or a portion of the electric power grid (*e.g.*, to let the detected potential cyber-attack be further investigated). As other examples, one or more parameters might be automatically modified, a software application might be automatically triggered to capture data and/or isolate possible causes, *etc.* Note that a threat alert signal might be transmitted via a cloud-based system, such as the PREDIX® field agent system. Note that according to some embodiments, a cloud approach might also be used to archive information and/or to store information about boundaries.

According to some embodiments, the system may further localize an origin of the threat to a particular data source node. For example, the localizing may be performed in accordance with a time at which a decision boundary associated with one data source node was crossed as compared to a time at which a decision boundary associated with another data source node was crossed. According to some embodiments, an indication of the particular data source node might be included in the abnormal alert signal.

Some embodiments described herein may take advantage of the physics of a control system by learning a priori from tuned high fidelity equipment models and/or actual "on the job" data to detect single or multiple simultaneous adversarial threats to the system. Moreover, according to some embodiments, all data source node data may be converted to features using advanced feature-based methods, and the real-time operation of the control system may be monitoring in substantially real-time. Abnormalities may be detected by classifying the monitored data as being "normal" or disrupted (or degraded). This decision boundary may be constructed using dynamic models and may help to enable early detection of vulnerabilities (and potentially avert catastrophic failures) allowing an operator to restore the control system to normal operation in a timely fashion.

Note that an appropriate set of multi-dimensional feature vectors, which may be extracted automatically (e.g., via an algorithm) and/or be manually input, might comprise a good predictor of measured data in a low dimensional vector space. According to some embodiments, appropriate decision boundaries may be constructed in a multi-dimensional space using a data set which is obtained via scientific principles associated with DoE techniques. Moreover, multiple algorithmic methods (e.g., support vector machines, one of the machine learning techniques) may be used to generate decision boundaries. Since boundaries may be driven by measured data (or data generated from high fidelity models), defined boundary margins may help to create a threat zone in a multi-dimensional feature space. Moreover, the margins may be dynamic in nature and adapted based on a transient or steady state model of the equipment and/or be obtained while operating the system as in self-learning systems from incoming data stream. According to some embodiments, a training method may be used for supervised learning to teach decision boundaries. This type of supervised learning may take into account an operator's knowledge about system operation (e.g., the differences between normal and abnormal operation).

Note that many different types of features may be utilized in accordance with any of the embodiments described herein, including principal components (weights constructed with natural basis sets) and statistical features (e.g., mean, variance, skewness, kurtosis, maximum, minimum values of time series signals, location of maximum and minimum values, independent components, etc.). Other examples include deep learning features (e.g., generated by mining experimental and/or historical data sets) and frequency domain features (e.g., associated with coefficients of Fourier or wavelet transforms). Note that a deep learning technique might be associated with, for example, an auto-encoder, a de-noising auto-encoder, a restricted Boltzmann machine, etc. Embodiments may also be associated with time series analysis features, such as cross-correlations, auto-correlations, orders of the autoregressive, moving average model, parameters of the model, derivatives and integrals of signals, rise time, settling time, neural networks, etc. Still other examples include logical features (with semantic abstractions such as "yes" and "no"), geographic/position locations, and interaction features (mathematical combinations of signals from multiple data source nodes and specific locations). Embodiments may incorporate any number of features, with more features allowing the approach to become more accurate as the system learns more about the physical process and threat. According to some embodiments, dissimilar values from data source nodes may be normalized to unit-less space, which may allow for a simple way to compare outputs and strength of outputs.

Thus, some embodiments may provide an advanced anomaly detection algorithm to detect cyber-attacks on, for example, key power grid sensors. The algorithm may identify which signals(s) are being attacked using data source node-specific decision boundaries and may inform a control system to take accommodative actions. In particular, a detection and localization algorithm might detect whether a sensor, auxiliary equipment input signal, control intermediary parameter, or control logical are in a normal or anomalous state.

Some embodiments of the algorithm may utilize feature-based learning techniques based on high fidelity physics models and/or machine operation data (which would allow the algorithm to be deployed on any system) to establish a high dimensional decision boundary. As a result, detection may occur with more precision using multiple signals, making the detection more accurate with less false positives. Moreover, embodiments may detect multiple attacks on data source node data, and rationalize where the root cause attack originated. For example, the algorithm may decide if a signal is anomalous because of a previous signal attack, or if it is instead independently under attack. This may be accomplished, for example, by monitoring the evolution of the features as well as by accounting for time delays between attacks.

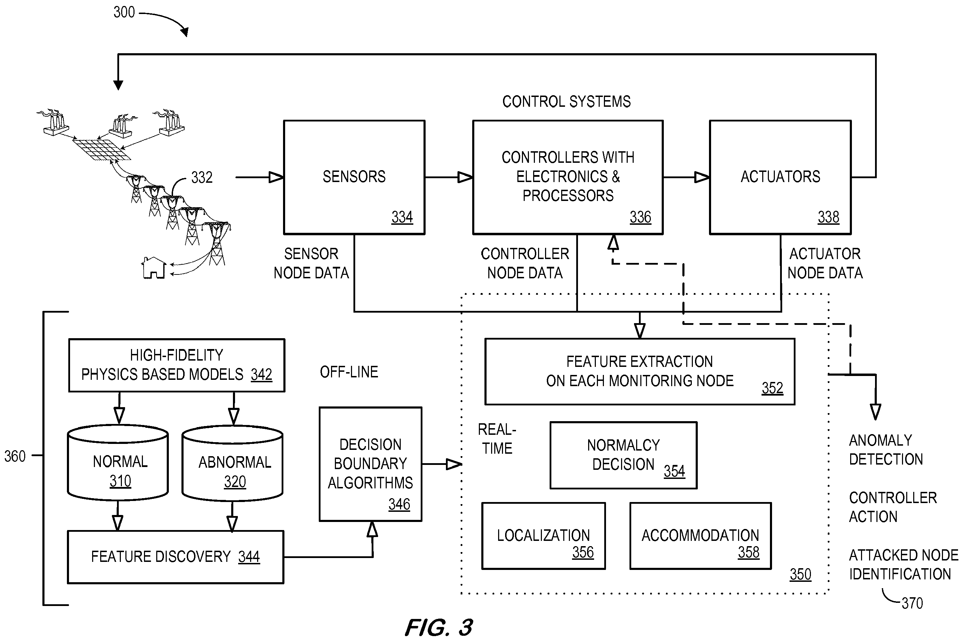

A cyber-attack detection and localization algorithm may process a real-time power grid signal data stream and then compute features (multiple identifiers) which can then be compared to the sensor specific decision boundary. A block diagram of a system 300 utilizing a sensor specific power grid cyber-attack detection and localization algorithm according to some embodiments is provided in FIG. 3. In particular, a power grid 332 provides information to sensors 334 which helps controllers with electronics and processors 336 adjust actuators 338. An offline abnormal state detection system 360 may include one or more high-fidelity physics based models 342 associated with the power grid 332 to create normal data 310 and/or abnormal data 320. The normal data 310 and abnormal data 320 may be accessed by a feature discovery component 344 and processed by decision boundary algorithms 346 while off-line (e.g., not necessarily while the power grid 332 is operating). The decision boundary algorithms 346 may generate a threat model including decision boundaries for various data source nodes. Each decision boundary may separate two data sets in a high dimensional space which is constructed by running a binary classification algorithm, such as a support vector machine using the normal data 310 and abnormal data 320 for each data source node signal (e.g.,

from the sensors 334, controllers 336, and/or the actuators 338).

A real-time threat detection platform 350 may receive the boundaries along with streams of data from the data source nodes. The platform 350 may include a feature extraction on each data source node element 352 and a normalcy decision 354 with an algorithm to detect attacks in individual signals using sensor specific decision boundaries, as well rationalize attacks on multiple signals, to declare which signals were attacked, and which became anomalous due to a previous attack on the system via a localization module 356. An accommodation element 358 may generate outputs 370, such as an anomaly decision indication (*e.g.*, threat alert signal), a controller action, and/or a list of attached data source nodes.

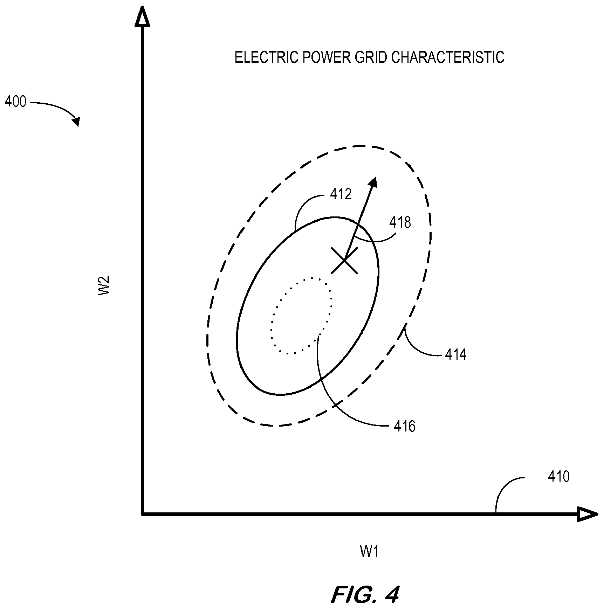

During real-time detection, contiguous batches of data source node data may be processed by the platform 350, normalized and the feature vector extracted. The location of the vector for each signal in high-dimensional feature space may then be compared to a corresponding decision boundary. If it falls within the attack region, then a cyber-attack may be declared. The algorithm may then make a decision about where the attack originally occurred. An attack may sometimes be on the actuators 338 and then manifested in the sensors 334 data. Attack assessments might be performed in a post decision module (*e.g.*, the localization element 356) to isolate whether the attack is related any of the sensor, controller, or actuator (*e.g.*, indicating which part of the data source node). This may be done by individually monitoring, overtime, the location of the feature vector with respect to the decision boundary. For example, when a sensor 334 is spoofed, the attacked sensor feature vector will cross the decision boundary earlier than the rest of the vectors as described with respect to FIG. 4. If a sensor is declared to be anomalous, and the load command to the auxiliary equipment is later determined to be anomalous, it may be determined that the original attack, such as signal spoofing, occurred on the sensor 334. Conversely, if the signal to the auxiliary equipment was determined to be anomalous first, and then later manifested in the sensor 334 feedback signal, it may be determined that the signal to the equipment was initially attacked.

According to some embodiments, it may be detected whether or not a signal is in the normal operating space (or abnormal space) through the use of localized decision boundaries and real time computation of the specific signal features. Moreover, an algorithm may differentiate between a sensor being attacked as compared to a signal to auxiliary equipment being attacked. The control intermediary parameters and control logical(s) may also be analyzed using similar methods. Note that an algorithm may rationalize signals that become anomalous. An attack on a signal may then be identified.

FIG. 4 illustrates 400 boundaries and a feature vector that might be associated with data source node parameters in accordance with some embodiments. In particular, a graph 410 includes a first axis representing value weight 1 ("w1"), a feature 1, and a second axis representing value weight 2 ("w2"), a feature 2. Values for w1 and w2 might be associated with, for example, outputs from a Principal Component Analysis ("PCA") that is performed on the input data. PCA might be one of the features that might be used by the algorithm to characterize the data, but note that other features could be leveraged.

The graph includes a hard boundary 412 (solid curve), a minimum boundary 416 (dotted curve), and a maximum boundary 414 (dashed curve) and an indication associated with current feature location for the data source node parameter (illustrated with an "X" on the graph). As illustrated in FIG. 4, the current data source node location is between the minimum and maximum boundaries (that is, the "X" is between the dotted and dashed lines). As a result, the system may determine that the operation of the electric power grid is normal (and no threat is being detected indicating that the system is currently under attack).

Existing methods for detecting abnormal conditions in data source nodes are limited to FDIA (which itself is very limited). The cyber-attack detection and localization algorithms described herein can not only detect abnormal signals of sensors, but can also detect signals sent to auxiliary equipment, control intermediary parameters and/or control logical(s). The algorithm can also understand multiple signal attacks. One challenge with correctly identifying a cyber-attack threat is that it may occur with multiple sensors being impacted by malware nearly at once. According to some embodiments, an algorithm may identify in real-time that an attack has occurred, which sensor(s) are impacted, and declare a fault response. To achieve such a result, the detailed physical response of the system must be known to create acceptable decision boundaries. This might be accomplished, for example, by constructing data sets for normal and abnormal regions by running Design of Experiments ("DoE") experiments on high-fidelity models. A data set for each sensor might comprise a feature vector for given threat values. Full factorial, Taguchi screening, central composite and Box-Behnken are some of the known design methodologies used to create the attack space. When models are not available, these DoE methods are also used to collect data from real-world power generator systems. Experiments may be run at different combinations of simultaneous attacks. In some embodiments, the system may detect degraded/faulty operation as opposed to a cyber-attack. Such decisions might utilize a data set associated with a degraded/faulty operating space. At the end of this process, the system may create data sets such as "attack v/s normal" and "degraded v/s normal" for use while constructing decision boundaries. Further note that a decision boundary may be created for each signal using data sets in feature space. Various classification methods may be used to compute decision boundaries. For example, binary linear and non-linear supervised classifiers are examples of methods that could be used to obtain a decision boundary.

Note that embodiments might utilize temporal and/or spatial normalization. Temporal normalization may provide normalization along a time axis. Spatial normalization may be used to normalize signals along multiple nodes (*e.g.*, sensor axis). In either case, the normalized signals may then be used to perform attack detection using feature extraction and comparisons to decision boundaries. Sensor, actuator, and controller node time-series data (as well as other types of data) may be processed in substantially real-time to extract "features" from this data. The feature data may then be compared to a decision boundary to determine if a cyber-attack has occurred to the system. A similar approach may be used for detecting attacks in spatially normalized data.

The processing of the real-time data may utilize a normal operating point of the electric power grid. This normal operating point might be determined, for example, based on system operating modes, external conditions, system degradation factors, *etc.* The real-time measured sensor data, actuator data, and controller nodes data may be processed such that a difference between actual and nominal values is computed and this difference, or delta, is normalized with the expected operating conditions coefficients.

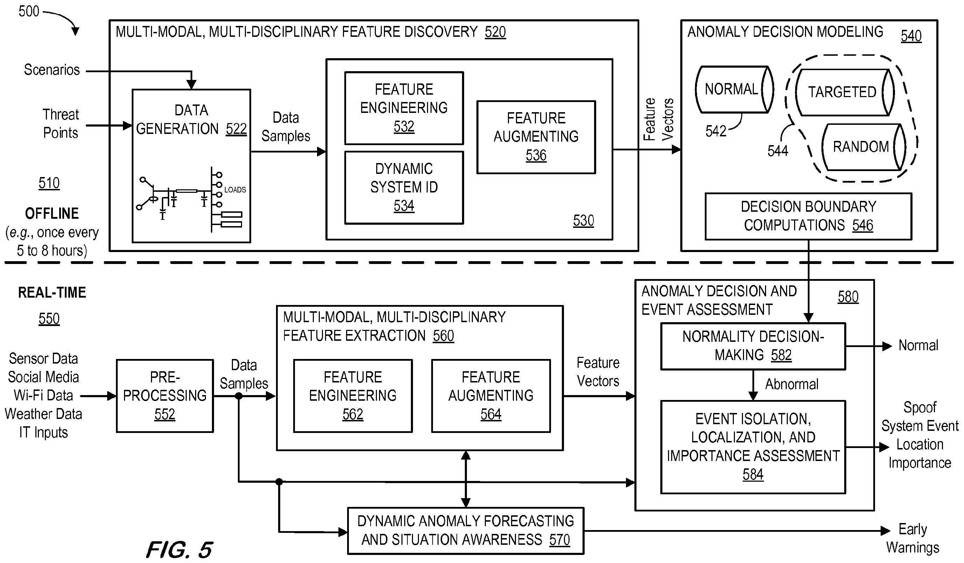

FIG. 5 is an offline and real-time anomaly decision and early warning tool architecture 500 according to some embodiments. In particular, the architecture 500 includes an offline portion 510 (*e.g.*, that performs calculations once every 6 to 8 hours) and a real-time portion 550. The offline portion 510 includes a Multi-Model, Multi-Disciplinary ("MMMD") feature discovery element 520 that receives scenarios and threat points. The scenarios and threat points may, for example, be provided to a data generation element 522 (*e.g.*, associated with a power system model) that generates data samples that are provided to feature engineering 532, dynamic system identification 534, and/or feature augmenting 536 elements of a feature discovery element 530 that in turn provides feature vectors to an anomaly decision modeling system 540. The anomaly decision modeling system 540 may include normal data 542 and abnormal data 544 (*e.g.*, targeted data and random data) that are used, along with the received feature vectors, by decision boundary computations 546 to output feature boundaries to an anomaly decision and event assessment element 580 in the real-time portion 550 of the architecture 500.

The real-time portion 550 of the architecture 500 may also include a pre-processing element 552 that receives information from homogeneous sources, such as sensor data, social media data (*e.g.*, tweets concerning the performance of the power grid), Wi-Fi data, weather data, IT inputs, *etc.* The pre-processing element 552 may then generate data samples that are provided to a MMMD feature extraction unit 560 and a dynamic anomaly forecasting and situation awareness element 570 (*e.g.*, to generate early warnings). The feature extraction unit 560 might include, for example, feature engineering 562 and feature augmenting 564, and provide feature vectors to the anomaly decision and event assessment element 580. According to some embodiments, the anomaly decision and event assessment element 580 includes normality decision making 582 (*e.g.*, to generate a normal indication) and event isolation, localization, and importance assessment element 584 (*e.g.*, to generate spoof indications, system event indications, location indications, importance indications, *etc.*).

According to some embodiments, the architecture 500 may implement a proposed framework that consists of two steps: (1) a feature-based model-assisted learning approach 510 for use in offline computation at a frequency of, for example, approximately four times a day; and (2) real-time, high speed detection process 550 (*e.g.*, operating from approximately once every second to once every minute) that leverages heterogeneous data sources. The offline decision boundary tool 510 may use a physics-based power systems model (*e.g.*, associated with the data generation element 522) to characterize different operation points as normal or abnormal conditions. The system may also flag abnormal events that may be associated with critical targets from a cybersecurity perspective. For this purpose, operation points may be defined to include normal operating points and any known vulnerabilities. The real-time tool 550 may use the decision boundary, various mapping functions built during the offline process 510 and real-time data from heterogeneous sensors to identify abnormal conditions from normal operation of the system.

The offline tool 510 might be run, for example, approximately two to four times per day, to represent an expected highest and lowest loading point for the electric power grid during that day. The power system model associated with the data generation element 522 may consist of network topology with power system components such as generators and transmission lines. Note that any of these physical grid assets may be potentially subject to a cyber-attack. According to some embodiments, synthetic data may be generated for a set of pre-determined operating points from several virtual sensors embedded in the model.

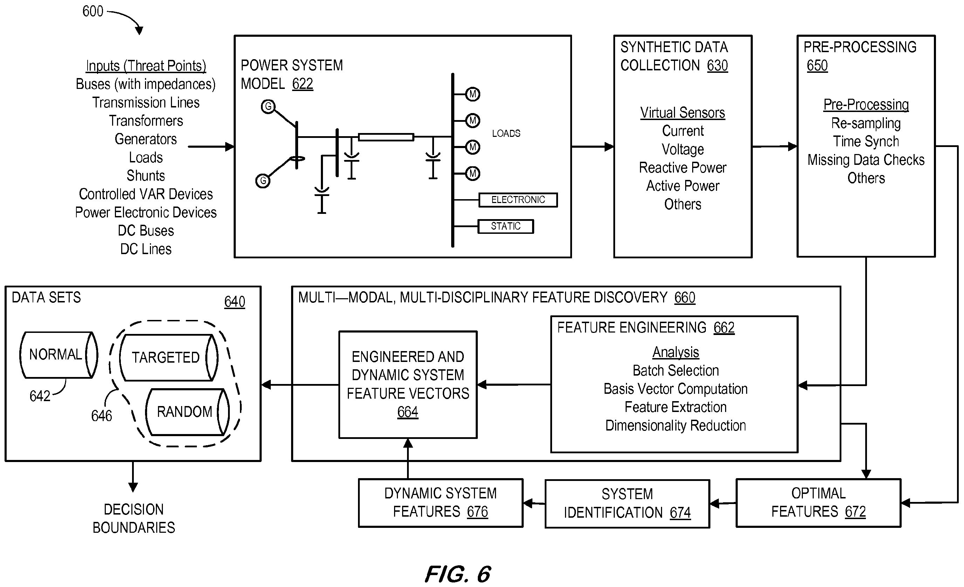

FIG. 6 is an offline anomaly decision boundary tool 600 in accordance with some embodiments. In particular, the tool 600 illustrates key steps used in a feature-based framework for offline computation. A power system model 622 may receive inputs (e.g., threat points) associated with, for example, buses (with impedances), transmission lines, generators, loads, shunts, controlled Volt-Ampere Reactive ("VAR") devices, power electronic devices, DC buses, DC lines, *etc.* Synthetic data collection 630 (*e.g.*, associated with virtual sensors, current, voltage, reactive power, active power, *etc.)* may receive information from the power system model and provide data to pre-processing 650. The pre-processing 650 might be associated with, for example, re-sampling, time synchronization, missing data checks, *etc.* and may help test a realistic scenario in a controlled simulation environment by creating abnormal scenarios for sensed data streams.

The pre-processed 650 sensor data is converted to salient features using a Multi-Modal, Multi-Disciplinary ("MMMD") feature discovery framework 660 that may employ machine learning to identify knowledge-based, shallow, and/or deep features by maximally leveraging the conventional (*e.g.*, existing) and unconventional data sources. Note that the MMMD feature discovery framework may be associated with feature engineering 662 (*e.g.*, associated with analysis such as batch selection, basis vector computation, feature extraction, dimensionality reduction, *etc.)* and engineered and dynamic system feature vectors 664. Moreover, pre-processing 650 information may pass through optimal features 672, system identification 674, and/or dynamic system features 676 before being provided to the engineered and dynamic system feature vectors 664. The MMMD feature discovery framework 660 may, according to some embodiments, output data sets (*e.g.*, normal data 642 and abnormal data 646 such as targeted data and random data) to be used to generate decision boundaries.

A subset of these features may be used for constructing a dynamic state space model in feature space that will model the time evolution of the features. This information may be augmented to the previous set of engineered feature vectors. Thus, the augmented feature vector may contain information from a physics-based model and the dynamic nature of the features themselves. For simplicity, time evolution with data from sensors within one processing batch might be utilized. According to some embodiments, feature maps (*e.g.*, basis vectors, feature vector dimension, feature parameters, *etc.)* will be stored for use during real-time operation. Various possible threat scenarios may be simulated for a given operating condition, and the importance of these threat scenarios with respect to their impact on a power system phenomenon (*e.g.*, voltage stability, inter-area oscillatory stability, *etc.)* may be quantified using a feature-based algorithm that exploits underlying network structure information. This may help characterize and rank the threats from the perspective of a large-scale power system phenomenon.

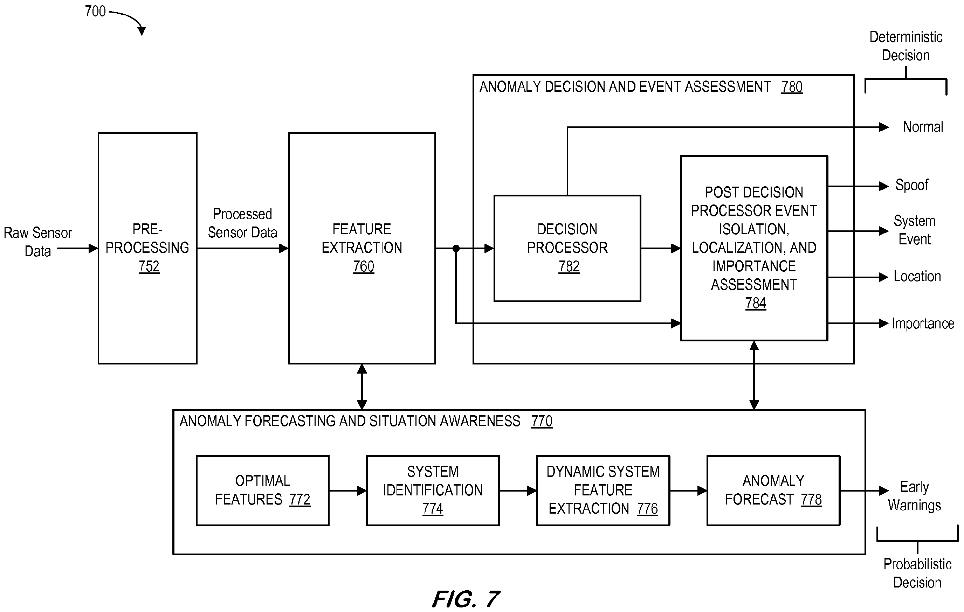

FIG. 7 illustrates a real-time decision, event/threat assessment, and early warning system 700 according to some embodiments. The real-time components may include, for example, pre-processing 752 (*e.g.*, associated with resampling, time synchronization, missing data checks, conditioning, *etc.)* that receives raw sensor data and generates processed sensor data. A feature extraction unit 760 (*e.g.*, associated with feature engineering for vector knowledge based shallow/deep learning and/or a feature augmenter for engineered and/or dynamic system feature vector functions) may receive the processed sensor data and provide information to a decision processor 782 of an anomaly decision and event assessment unit 780. The decision processor 782 may generate a normal indication (if appropriate) and/or provide abnormal data to a post decision processor event isolation, localization, and importance assessment module 784. The post decision processor event isolation, localization, and importance assessment unit 784 may, for example, receive social media data, Wi-Fi data, weather data, communication network data, *etc.* and generate spoof indications, system event indications, location indications, importance indications, *etc.* (*e.g.*, deterministic decisions). An anomaly forecasting and situation awareness engine 770 may include optimal features 772, system identification 774, dynamic system feature extraction 776, and/or an anomaly forecast element 778 to generate early warning indications for spoofs or systems events (e.g., probabilistic decisions).

In real-time, raw sensor data may be obtained from traditional power system sensors like Remote Terminal Units ("RTUs") and modern sensors like transmission and distribution Phasor Measurement Units ("PMUs"), micro-PMUs, Digital Fault Recorders ("DFRs"), and smart meters. This may be in addition to non-traditional sources like Wi-Fi activity, text messaging activity, cyber infrastructure status inputs, and/or social media and internet feeds. Pre-processing 752 may be performed to align the datasets and identify the possibility of data integrity attacks (e.g., associated with spoofing). In this step, the system may import various feature mapping functions generated in the offline decision boundary tool for use in real-time. This features set may be augmented further with salient features from the dynamic system by performing system identification on current and past select sets of optimal features. The dynamic system model may be updated, for example, in real-time for use in forecasting and situation awareness.

The augmented feature set may be comprised of both static and dynamic features and may be compared against the decision boundaries constructed from offline analysis so a decision can be made with a corresponding confidence interval. This feature set may also be used for the anomaly forecasting and situation awareness engine 870 to enable early warning of impending threats. If an abnormality is detected, the feature set may be further analyzed inside the post decision processing module 884. In this module 884, the abnormality event may be assessed further using both conventional and unconventional sensor data and classified as spoofing and bad data, a system event, a cyber-physical attack, *etc.* Note that this decision and classification may be considered deterministic in nature. The location and the criticality or importance of the said abnormality location may also be assessed using the bad data detection framework and complex network theory models developed during the offline computations. More probabilistic decisions might come from the anomaly forecasting and situation awareness engine 870 in which anomaly forecasting is done for early warning using updated dynamic state space models from real-time features.

According to some embodiments, data may be received in steams or batches. The anomaly decision and event assessment engine 770 of FIG. 7 may provide a deterministic decision about the system status (*e.g.*, "normal," "spoofing," or "system event"). Before an anomaly happens, the deterministic system status may be "normal" and it may remain normal until an anomaly actually happens. The engine 770 may detect an anomaly once it happens and decide whether it a spoofing situation or a system event. The anomaly forecasting and situation awareness engine 770 may provide a probabilistic decision and generate early warnings for the power grid. At each time instant, a situation awareness block may project a current status into the future using a stochastic dynamic forecast. The probabilistic status may remain normal until the confidence interval of the normal status becomes sufficiently large (and the confidence level drops) that the situation warrants an early warning indication. Once an early warning is generated, future forecasting may continue with a probabilistic decision about whether an upcoming forecasted anomaly is an attack or a fault (with associated probabilities of occurrence for each). Between the time an early warning is generated and the time an anomaly actually happens, the confidence intervals of attack and fault may tighten (and the confidence levels may increase) until a minimum is reached (representing a maximum confidence) at the time of an actual anomaly (at which point the deterministic status may also reflect the anomaly). The future forecasting may still continue with the situation awareness block (with the confidence intervals naturally increasing as the prediction horizon expands).

As the system receives continuous updates from different sensors, the proposed framework and algorithms may flag any suspected abnormalities along with a confidence interval. A deterministic decision may represent a firm decision, whereas a probabilistic decision may be associated with a future forecast. In the deterministic decision, the system may provide the location and an assessment of the importance of the attack with respect to electric power grid. A power grid operator may then choose to view the location of the abnormality and/or the sensors that are feeding the abnormal data. The power grid operator may also decide to make further control selections as appropriate.

According to some embodiments, a complex network approach may help identify critical assets and nodes in a power grid in order to determine their vulnerability to malicious intent such as cyber-attacks. In such an approach, a power system model ("grid model") that represents the normal operating condition of the grid may be used. The power system model might consist of static network information such as network topology, impedance of power lines and transformers that connect the various buses and the generators and loads (e.g., represented as power injections at the respective buses). The power system model might be augmented with dynamic data such as sub-transient models for different generator assets, motor models for loads and other high-power power electronic devices. According to some embodiments, the power grid may be modeled using a full Differential-Algebraic Equation ("DAE") representation.

Note that in the framework described with respect to FIGS. 5 through 8, identifying salient features may be an important aspect of developing control optimization for dynamic systems as well as machine learning and data mining solutions. Extracting features from different data sources (*e.g.*, time-series sensor measurements, text documents, event logs, *etc.)* is a way of leveraging information from different types of data sources (multiple "modalities") for improved performance. According to some embodiments, an MMMD feature discovery framework may generate features of features from different data sources. That is, in an integrated framework an initial vector of static features may be extracted (*e.g.*, using machine learning techniques). Then, in order to capture the evolution of features over time, a dynamic model may be identified for an optimal subset of the original features, and dynamic model features (or "features of the features") may be extracted to be augmented as the overall feature vector. Note that features might be associated with a dynamic model comprising, for example, stability margins, controllability indices, observability indices, elements of an observability matrix, elements of a controllability matrix, poles, and/or zeros of the dynamic model of the evolution of features over time.

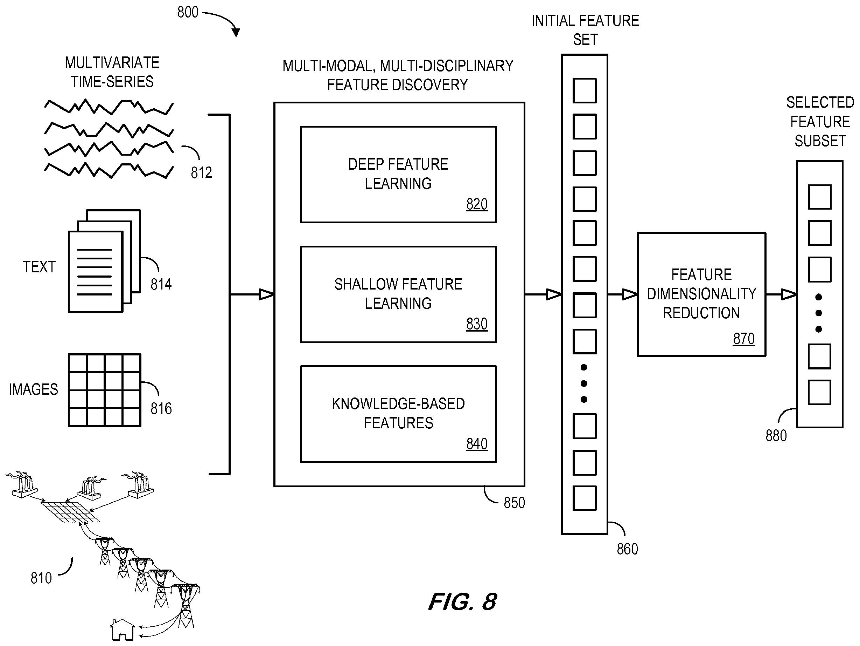

FIG. 8 is a feature vector information flow diagram 800 wherein a heterogeneous set of data sources are associated with an electric power grid 810. The data sources might include, for example, multivariate time-series information 812 (*e.g.*, from sensor nodes), text data 814 (*e.g.*, extracted from social media sources), images 816, *etc.* Information from the data sources 812, 814, 816 is provided to MMMD feature discovery 850 which generates an initial feature set 860. The MMMD feature discovery 850 might include, according to some embodiments, deep feature learning 520, shallow feature learning 830, and/or knowledge-based features 840. Because the initial feature set 860 might be relatively large, a feature dimensionality reduction process 870 may be utilized to create a selected feature subset 880.

The information flow diagram 800 may achieve improved detection performance by maximally leveraging information from both conventional sensor data (*e.g.*, sensor measurements from the grid and generators) and unconventional data *(e.g.,* cell phone, web, satellite, and thermal data) through multi-modal, multi-disciplinary feature discovery 850. Given the heterogeneous data types, the system may extract features from each individual data source using different feature extraction methods and then combine the results to create the initial feature set 860 (this "combining" process is often referred as "feature fusion" in machine learning and data-mining domains). Because the initial feature set 860 is likely substantially large, the system then applies feature dimensionality reduction 870 techniques to reduce the number of features to a reasonable level before the selected feature subset 880 is used by an anomaly detection engine.

Note that the MMMD feature discover 850 may include some or all of knowledge-based feature 840 engineering, shallow feature learning 830, and deep feature learning 820. Knowledge-based feature 840 engineering may use domain or engineering knowledge of power grid 810 physics to create features from different sensor measurements. These features might simply be statistical descriptors (*e.g.*, maximum, minimum, mean, variance, different orders of moments, *etc.)* calculated over a window of a time-series signal and its corresponding Fast Fourier Transformation ("FFT") spectrum as well. The knowledge-based features 840 might also utilize a power system analysis, such as basis vector decomposition, state estimation, network observability matrices, topology matrices, system plant matrices, frequency domain features and system poles and zeros. These analyses may represent a characterization of the current power grid 810 operation through steady-state, transient, and small signal behaviors.

Although knowledge-based feature 840 engineering is a traditional approach for feature extraction, it is often a laborious, manual process. The approach is also very application specific, and therefore not generalizable or scalable. Learning features directly from data (*e.g.*, via machine learning) may address these issues. For example, shallow feature learning 830 techniques include many unsupervised learning (*e.g.*, k-means clustering), manifold learning and nonlinear embedding (*e.g.*, isomap methods and Locally-Linear Embedding ("LLE")), low-dimension projection (*e.g.*, Principal Component Analysis ("PCA") and Independent Component Analysis ("ICA")), and/or neural networks (*e.g.*, Self-Organizing Map ("SOM") techniques). Other examples of shallow feature learning 830 techniques include genetic programming and sparse coding. The deep feature learning 820 may represent a sub-field of machine learning that involves learning good representations of data through multiple levels of abstraction. By hierarchically learning features layer by layer, with higher-level features representing more abstract aspects of the data, deep feature learning 820 can discover sophisticated underlying structure and features.

The multi-modal, multi-disciplinary feature discovery 850 (or "extraction") will most likely lead to a large number of features in the initial feature set 860. Moreover, many redundant features may exist. Directly using such a large number of features may be burdensome for downstream anomaly detection models. As a result, feature dimensionality reduction 870 may reduce the number of features by removing redundant information while maximally preserving useful information of the features. Embodiments described herein may be associated with feature selection and/or feature transformation techniques.

By combining knowledge-based feature 850 engineering and advanced deep feature learning 820 techniques (and applying those to different data sources), the MMMD feature discovery 850 framework may be effective in discovering a feature set that provides accurate and reliable threat detection. Note that the framework is generic (and can be used effectively for other analytics applications) and flexible in handling situations where the numbers and the types of available data sources vary from system to system.

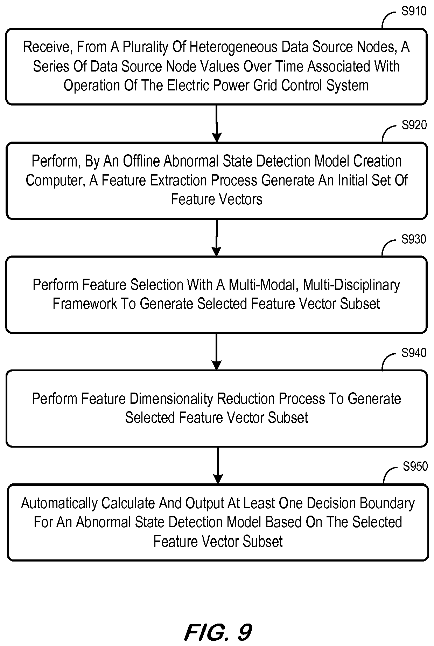

FIG. 9 is a method for creating a selected feature subset according to some embodiments. At S910, the system may receive, from a plurality of heterogeneous data source nodes, a series of data source node values over time associated with operation of the electric power grid control system. One example of a data source is sensor data, such as data from critical sensor nodes of the electric power grid, actuator nodes of the electric power grid, controller nodes of the electric power grid, key software nodes of the electric power grid, data from switches, data from critical measurement points of an electric bus, and/or data from a circuit breaker. Other examples of data sources might include text data, image data, cellular telephone data, satellite data, web data, social media data, wireless network data, weather data, information technology inputs, *etc.* Note that the received series of data source node values might include normal and abnormal data source node values.

At S920, the system may perform a feature extraction process to generate an initial set of feature vectors. According to some embodiments, the feature extraction process may be performed in connection with an offline abnormal state detection model creation computer and/or MMMD feature discovery. The feature extraction process may be further associated with a shallow feature learning technique, such as unsupervised learning, k-means clustering, manifold learning, non-linear embedding, an isomap method, LLE, low-dimension projection, PCA, ICA, neural networks, a SOM method, genetic programming, and/or sparse coding. According to some embodiments, the feature extraction process is associated with a deep feature learning technique and/or a knowledge-based features technique. Some examples of knowledge-based features techniques are associated with statistical descriptors, such as a maximum value, a minimum value, a mean, variance data, different orders of moments, and/or FFT spectrum information. Other examples of knowledge based features techniques are associated with a power system analysis including basis vector decomposition, state estimation, network observability matrices, topology matrices, system plant matrices, frequency domain features, system poles, and/or system zeros.

At S930, the system may perform feature section with a multi-modal, multi-disciplinary framework to generate a selected feature vector subset. According to some embodiments, at S940 the system may perform a feature dimensionality reduction process to generate the selected feature vector subset. According to some embodiments, the feature dimensionality reduction process may be associated with a feature selection technique and/or a feature transformation technique. At S950, the system may automatically calculate and output at least one decision boundary for an abnormal state detection model based on the selected feature vector subset. According to some embodiments, the selected feature vector subset is further used in connection with anomaly detection, anomaly accommodation, anomaly forecasting, and/or system diagnosis.

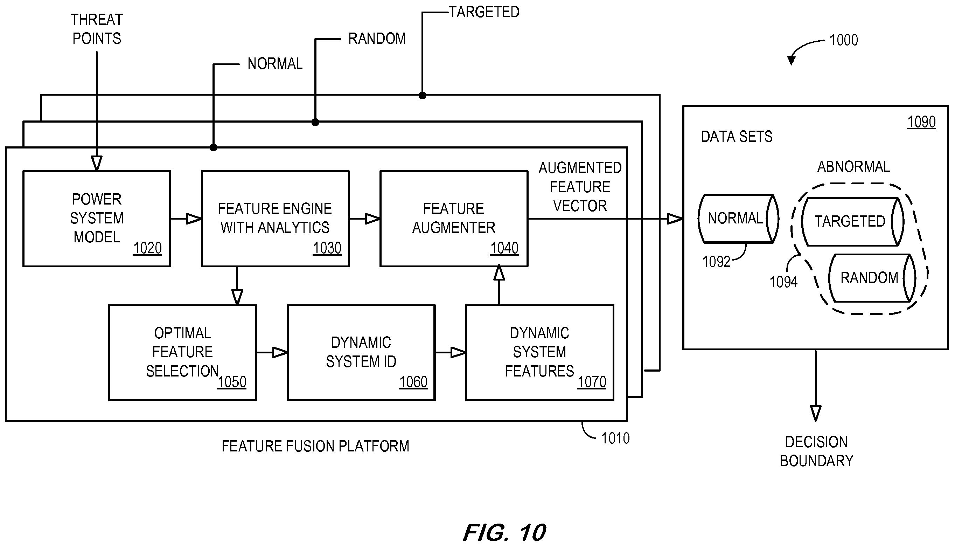

FIG. 10 illustrates a system 1000 to create a decision boundary in accordance with some embodiments. The system 1000 may be associated with a data-driven model-based feature fusion approach. In particular, a feature fusion platform 1010 receives threat point information and generates data sets 1090. The data sets 1090 might include, for example, normal data 1092 and abnormal data 1094 (*e.g.*, targeted data and random data) and may be used to generate at least one decision boundary (*e.g.*, separating normal power grid behavior from abnormal power grid behavior). Note that the feature fusion platform 1010 may execute in connection with normal data, random data, and/or targeted data.

The threat point information may be processed by a power system model 1020 to create virtual sensor data that is provided to a feature engine with analytics 1030. The feature engine with analytics 1030 provides data to a feature augmenter 1040 and an optimal feature selection element 1050. A dynamic system identification element 1160 may receive information from the optimal feature selection element 1050 and provide data to dynamic system features 1070. The feature augmenter 1040 may then use information from both the feature engine with analytics 1030 and the dynamic systems features 1070 to create augmented feature vectors for the data sets 1090.

According to some embodiments, the dynamic system identification 1060 algorithm may receive a feature vector computed by the feature engine 1030. Then, an optimal subset 1050 of the features suitable for dynamic modeling is selected. The optimal feature selection algorithm 1050 may take the variation and sensitivity of the features (as well as computational efficiency and sparsity structure) into account. This step may help develop a tractable solution for feature evolution for dynamic modeling. The selected features may then be used for dynamic modeling using state space system identification methods.

According to some embodiments, the dynamic state space model of features may be represented as:

$$x[k+1] = Ax[k] + Bw[k]$$

$$y[k] = Cx[k] + Dv[k]$$

where *A, B, C,* and *D* are the state space matrices, y is the measurement vector (*i.e.*, computed features vector), x is the vector of states, and *v* and *w* are exogenous disturbances (process and measurement noise, respectively). The process noise may represent model uncertainty and the measurement noise may represent numerical errors in feature extractions. The *C* matrix may be taken as identity *(C = 1),* so the system states would be the same as features (subject to measurement noise). This may provide observability for a model with probability one (assuming zero-mean measurement noise) and improve the numerical efficiency and convergence properties of the system identification.

Once the dynamic model for feature evolution is identified, the properties of the dynamic model (such as stability margins and modal observability margins) may be extracted as additional features. These margins may indicate the distance of individual features to become unstable or unobservable, which is an indication of potential anomalies. These additional features (features of the features) may be sent to the feature augmenter 1040 to be used collectively in decision boundary computations.

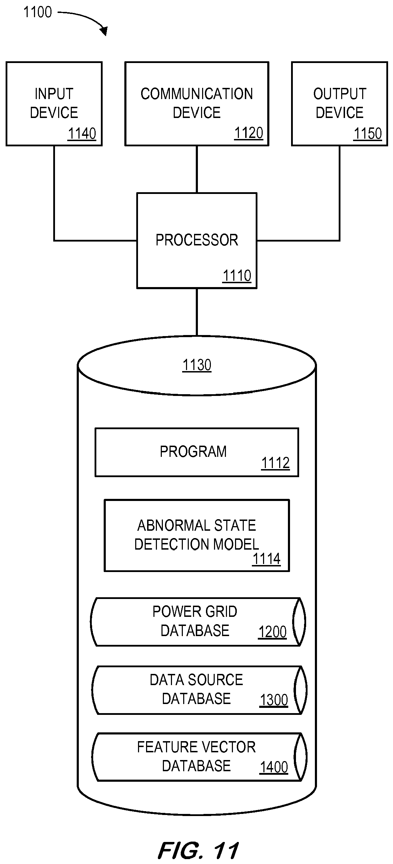

The embodiments described herein may be implemented using any number of different hardware configurations. For example, FIG. 11 is a block diagram of an electric power grid protection platform 1100 that may be, for example, associated with the system 100 of FIG. 1. The electric power grid protection platform 1100 comprises a processor 1110, such as one or more commercially available Central Processing Units ("CPUs") in the form of one-chip microprocessors, coupled to a communication device 1120 configured to communicate via a communication network (not shown in FIG. 11). The communication device 1120 may be used to communicate, for example, with one or more remote data source nodes, user platforms, *etc.* The electric power grid protection platform 1100 further includes an input device 1140 (*e.g.,* a computer mouse and/or keyboard to input power grid information) and/an output device 1150 (*e.g.,* a computer monitor to render a display, provide alerts, transmit recommendations, and/or create reports). According to some embodiments, a mobile device, monitoring physical system, and/or PC may be used to exchange information with the electric power grid protection platform 1100.

The processor 1110 also communicates with a storage device 1130. The storage device 1130 may comprise any appropriate information storage device, including combinations of magnetic storage devices (*e.g.,* a hard disk drive), optical storage devices, mobile telephones, and/or semiconductor memory devices. The storage device 1130 stores a program 1112 and/or an abnormal state detection model 1114 for controlling the processor 1110. The processor 1110 performs instructions of the programs 1112, 1114, and thereby operates in accordance with any of the embodiments described herein. For example, the processor 1110 may receive, from a plurality of heterogeneous data source nodes, a series of data source node values over time associated with operation of the electric power grid control system. The processor 1110 may then perform a feature extraction process to generate an initial set of feature vectors. A feature selection process may be performed with a multi-model, multi-disciplinary framework by the processor 1110 to generate a selected feature vector subset. At least one decision boundary may be automatically calculated by the processor for an abnormal state detection model based on the selected feature vector subset. Note that a set of feature vectors might include normal feature vectors and/or abnormal feature vectors. For example, in some cases only normal feature vectors might be used along with unsupervised learning algorithms to construct a decision boundary. In such scenarios, abnormal feature vectors might not be used. Another option may be to use synthetically generated abnormal data values by injecting false data into normal data values and the use the normal and abnormal values in the abnormal state detection model creation computer.

The programs 1112, 1114 may be stored in a compressed, uncompiled and/or encrypted format. The programs 1112, 1114 may furthermore include other program elements, such as an operating system, clipboard application, a database management system, and/or device drivers used by the processor 1110 to interface with peripheral devices.

As used herein, information may be "received" by or "transmitted" to, for example: (i) the electric power grid protection platform 1100 from another device; or (ii) a software application or module within the electric power grid protection platform 1100 from another software application, module, or any other source.

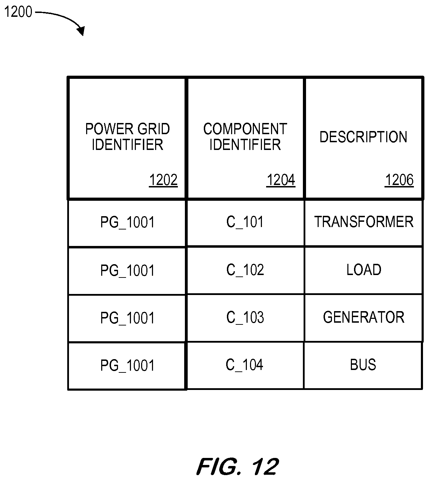

In some embodiments (such as the one shown in FIG. 11), the storage device 1130 further stores a power grid database 1200, data source database 1300, and a feature vector database 1400. Example of databases that may be used in connection with the electric power grid protection platform 1100 will now be described in detail with respect to FIGS. 12 through 14. Note that the databases described herein are only examples, and additional and/or different information may be stored therein. Moreover, various databases might be split or combined in accordance with any of the embodiments described herein.

Referring to FIG. 12, a table is shown that represents the power grid database 1200 that may be stored at the electric power grid protection platform 1000 according to some embodiments. The table may include, for example, entries identifying components associated with an electric power grid. The table may also define fields 1202, 1204, 1206 for each of the entries. The fields 1202, 1204, 1206 may, according to some embodiments, specify: a power grid identifier 1202, a component identifier 1204, and description 1206. The power grid database 1200 may be created and updated, for example, offline (non-real time) when a new electric power grid is monitored or modeled.

The power grid identifier 1202 may be, for example, a unique alphanumeric code identifying an electric power grid to be monitored. The component identifier 1204 might be associated with an element of the power grid and the description 1206 might describe the component (e.g., a transformer, a load, etc.). The power grid database 1200 might further store, according to some embodiments, connections between components (e.g., defining a topology of the grid), component statuses, etc. According to some embodiments, the information in the power grid database may be used in connection with knowledge-based features 840 of FIG. 8 and/or the power system model 1020 of FIG. 10.

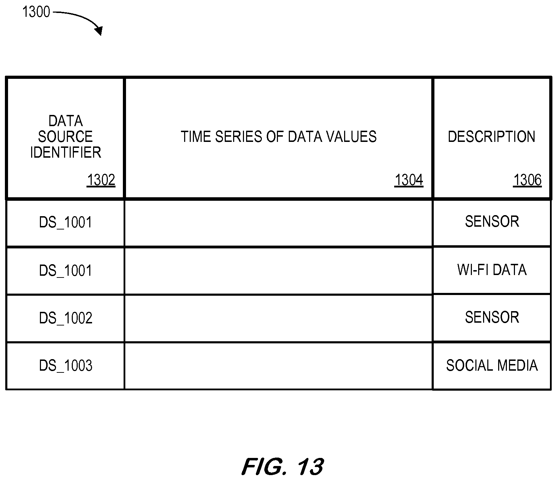

Referring to FIG. 13, a table is shown that represents the data source database 1300 that may be stored at the electric power grid protection platform 1000 according to some embodiments. The table may include, for example, entries identifying data sources associated with an electric power grid. The table may also define fields 1302, 1304, 1306 for each of the entries. The fields 1302, 1304, 1306 may, according to some embodiments, specify: a data source identifier 1302, a time series of data values 1304, and description 1306. The data source database 1300 may be created and updated, for example, based on information received from heterogeneous sensors.

The data source identifier 1302 may be, for example, a unique alphanumeric code identifying a data source that might provide information to be monitored to protect an electric power grid. The time series of values 1304 might be associated with a set of numbers being reported by a particular sensor (e.g., representing voltages, currents, etc.) and the description 1306 might describe the type of information being monitored (e.g., from a sensor, social media, weather data, etc.). The data source database 1300 might further store, according to some embodiments, other information such as a power grid identifier or component identifier (e.g., which might be based on or associated with the power grid identifier 1202 and component identifier 1204 described with respect to the power grid database 1200 of FIG. 12). According to some embodiments, information from the data source database 1300 may be provided as inputs to the MMMD 850 of FIG. 8.

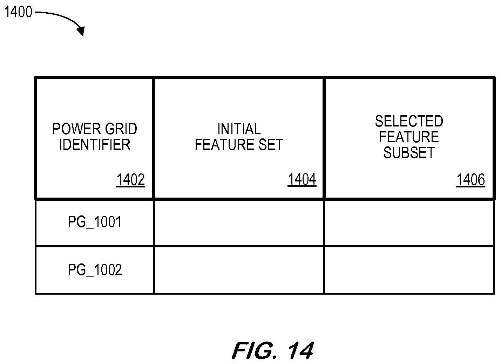

Referring to FIG. 14, a table is shown that represents the feature vector database 1400 that may be stored at the electric power grid protection platform 1000 according to some embodiments. The table may include, for example, entries identifying electric power grids being analyzed by a MMMD framework. The table may also define fields 1402, 1404, 1406 for each of the entries. The fields 1402, 1404, 1406 may, according to some embodiments, specify: a power grid identifier 1402, an initial feature set 1404, and a selected feature subset 1406. The feature vector database 1400 may be created and updated, for example, offline when an electric power grid is newly added or modified.

The power grid identifier 1402 may be, for example, a unique alphanumeric code identifying an electric power grid to be monitored (and may be based on, or associated with, the power grid identifier 1202 in the power grid database 1200). The initial feature set 1404 may represent values associated with the initial feature set 960 created by the MMMD feature discovery 850 of FIG. 8. The selected feature subset 1306 may represent values associated with the selected feature subset 880 created by the feature dimensionality reduction 870 of FIG. 8. The selected feature subset 1404 may be used, according to some embodiments, to separate normal behavior from abnormal behavior for an electric power grid.

Note that cyber security is an important function required in the protection of assets, such as power grid equipment. Dynamic normalization in this space may improve the resolution of detection. The machines associated with power grids can be very complex, and embodiments described herein may permit an implementation of a cyber security algorithm that makes detections fast and reliably. Note that a Receiver Operating Conditions ("ROC") curve might be used to evaluate the use of dynamic normalization for load fluctuations (e.g., including indications of true and false positive detections, true and false negative detections, etc.).

Thus, the hybrid data-driven, model-based approach described herein may reduce limitations associated with a sole data-driven (e.g., being memory-less) and sole model-based (e.g., not being scalable to very large dimensions) approaches by combining the two worlds into a unified and integrated framework. Moreover, embodiments may provide large-scale learning for an electric power grid. Given the complexity of a power grid system, and heterogeneous data sources from conventional grid sensors (e.g., PMUs, DFRs, Micro-PMUs) and unconventional sensors such as cyber sensors (e.g., sensors mining twitter messages, sensors processing Wi-Fi signals, etc.) data can be substantially large and dissimilar. Embodiments described herein may facilitate learning features from such a large dataset and effectively reduce the number of features. Moreover, features with dynamic components may be computed so that an augmented set includes both static and dynamic feature set information in one large augmented feature vector.

The following illustrates various additional embodiments of the invention. These do not constitute a definition of all possible embodiments, and those skilled in the art will understand that the present invention is applicable to many other embodiments. Further, although the following embodiments are briefly described for clarity, those skilled in the art will understand how to make any changes, if necessary, to the above-described apparatus and methods to accommodate these and other embodiments and applications.

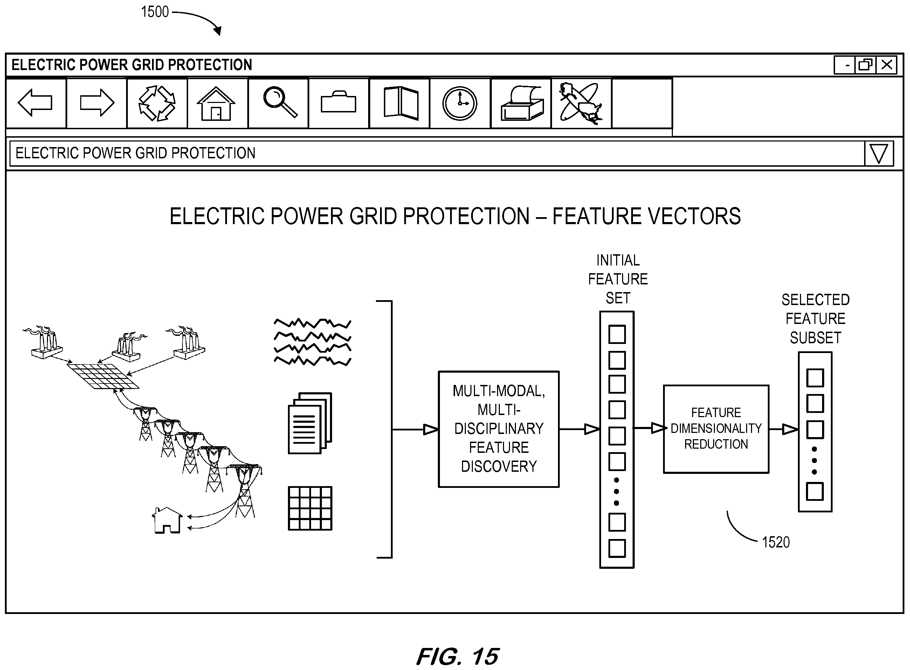

Although specific hardware and data configurations have been described herein, note that any number of other configurations may be provided in accordance with embodiments of the present invention (e.g., some of the information associated with the databases described herein may be combined or stored in external systems). For example, although some embodiments are focused on electric power grids, any of the embodiments described herein could be applied to other types of assets, such as damns, wind farms, etc. Moreover, note that some embodiments may be associated with a display of information to an operator. For example, FIG. 15 illustrates an interactive Graphical User Interface ("GUI") display 1500 that might display information about an electric power grid 1510 (e.g., including an initial set of feature vectors and a selected feature vector subset). According to some embodiments, information about feature vectors and/or attack statuses may be interwoven between different power grids. For example, one power grid might be aware of the status of other nodes (in other power grids) and such an approach might help thwart coordinated cyber-threats.

In addition to automatic threat detection, some embodiments described herein might provide systems with an additional cyber layer of defense and be deployable without custom programming (e.g., when using operating data). Some embodiments may be sold with a license key and could be incorporated as monitoring service. For example, feature vectors and/or boundaries might be periodically updated when equipment in a power grid is upgraded.

The present invention has been described in terms of several embodiments solely for the purpose of illustration. Persons skilled in the art will recognize from this description that the invention is not limited to the embodiments described, but may be practiced with modifications and alterations limited only by the spirit and scope of the appended claims.

Various aspects and embodiments of the present invention are defined by the following numbered clauses:

   1. A computerized method to protect an electric power grid control system, comprising:

      receiving, from a plurality of heterogeneous data source nodes, a series of data source node values over time associated with operation of the electric power grid control system;

      performing, by an offline abnormal state detection model creation computer, a feature extraction process to generate an initial set of feature vectors;

   performing feature selection with a multi-model, multi-disciplinary framework to generate a selected feature vector subset;
   automatically calculating and outputting at least one decision boundary for an abnormal state detection model based on the selected feature vector subset;
   receiving, at a real-time threat detection computer, a series of current data source node values;
   generating a set of current feature vectors based on the offline feature creation process; accessing the abnormal state detection model having the at least one decision boundary created offline; executing the abnormal state detection model; and transmitting an abnormal state alert signal based on the set of current feature vectors and the at least one decision boundary.

2. The method of clause 1, wherein at least one of the heterogeneous data source nodes is associated with at least one of: (i) sensor data, (ii) text data, (iii) image data, (iv) cellular telephone data, (v) satellite data, (vi) web data, (vii) social media data, (viii) wireless network data, (ix) weather data, (x) information technology inputs, (xi) critical sensor nodes of the electric power grid, (xii) actuator nodes of the electric power grid, (xiii) controller nodes of the electric power grid, (xiv) key software nodes of the electric power grid, (xv) data from switches, (xvi) data from critical measurement points of an electric bus, and (xvii) data from a circuit breaker.

3. The method of any preceding clause, wherein the feature selection includes at least one of: (i) a shallow feature learning technique, (ii) a deep feature learning technique, and (iii) a knowledge-based features technique.

4. A non-transitory, computer-readable medium storing instructions that, when executed by a computer processor, cause the computer processor to perform a method to protect an electric power grid control system, the method comprising: receiving, from a plurality of heterogeneous data source nodes, a series of data source node values over time associated with operation of the electric power grid control system;

performing, by an offline abnormal state detection model creation computer, a feature extraction process to generate an initial set of feature vectors;

performing feature selection with a multi-model, multi-disciplinary framework to generate a selected feature vector subset; and

automatically calculating and outputting at least one decision boundary for an abnormal state detection model based on the selected feature vector subset.

5. The medium of any preceding clause, wherein the feature selection includes at least one of: (i) a shallow feature learning technique, (ii) a deep feature learning technique, and (iii) a knowledge-based features technique.

**Claims**

1. A system (100) to protect an electric power grid control system, comprising:

a plurality of heterogeneous data source nodes (130) each generating a series of data source node (130) values over time associated with operation of the electric power grid control system; and
an offline abnormal state detection model creation computer (140), coupled to the heterogeneous data source nodes (130), to:

(i) receive the series of data source node (130) values and perform a feature extraction process to generate an initial set of feature vectors,
(ii) perform feature selection with a multi-model, multi-disciplinary framework to generate a selected feature vector subset,
(iii) automatically calculate and output at least one decision boundary for an abnormal state detection model (155) based on the selected feature vector subset.

2. The system (100) of claim 1, wherein the offline abnormal state detection model creation computer (140) is further to perform a feature dimensionality reduction process to generate the selected feature vector subset.

3. The system (100) of claim 2, wherein the feature dimensionality reduction process is associated with a feature selection technique.

4. The system (100) of claim 2, wherein the feature dimensionality reduction process is associated with a feature transformation technique.

5. The system (100) of any of claims 1 to 4, wherein the received series of data source node (130) values includes normal data source node values 110 and abnormal data source node values 120.

6. The system (100) of any preceding claim, wherein at least one of the heterogeneous data source nodes (130) is associated with at least one of: (i) sensor data, (ii) text data, (iii) image data, (iv) cellular telephone data, (v) satellite data, (vi) web data, (vii) social media data, (viii) wireless network data, (ix) weather data, (x) information technology inputs, (xi) critical sensor nodes of the electric power grid, (xii) actuator nodes of the electric power grid, (xiii) controller nodes of the electric power grid, (xiv) key software nodes of the electric power grid, (xv) data from switches, (xvi) data from critical measurement points of an electric bus, and (xvii) data from a circuit breaker.

7. The system (100) of any preceding claim, wherein the feature selection is further associated with a shallow feature learning technique.

8. The system (100) of any preceding claim, wherein the shallow feature learning technique utilizes at least one of: (i) unsupervised learning, (ii) k-means clustering, (iii) manifold learning, (iv) non-linear embedding, (v) an isomap method, (vi) Locally-Linear Embedding ("LLE"), (vii) low-dimension projection, (viii) Principal Component Analysis ("PCA"), (ix) Independent Component Analysis ("ICA"), (x) neural networks, (xi) a Self-Organizing Map ("SOM") method, (xii) genetic programming, and (xiii) sparse coding.

9. The system (100) of any preceding claim, wherein the feature selection is further associated with a deep feature learning technique associated with at least one of: (i) an auto-encoder, (ii) a de-noising auto-encoder, and (iii) a restricted Boltzmann machine.

10. The system (100) of any preceding claim, wherein the feature selection is further associated with a knowledge-based features technique that utilizes a statistical descriptor including at least one of: (i) a maximum value, (ii) a minimum value, (iii) a mean, (iv) variance data, (v) different orders of moments, and (vi) fast Fourier transformation spectrum information.

11. The system (100) of claim 10, wherein the knowledge-based features technique utilizes a power system analysis including at least one of: (i) basis vector decomposition, (ii) state estimation, (iii) network observability matrices, (iv) topology matrices, (v) system plant matrices, (vi) frequency domain features, (vii) system poles, and (viii) system zeros.

12. The system (100) of any preceding claim, wherein the selected feature vector subset is further used in connection with at least one of: (i) anomaly detection, (ii) anomaly accommodation, (iii) anomaly forecasting, and (iv) system diagnosis.

13. The system (100) of any preceding claim, wherein features are associated with a dynamic model 342 comprising of at least one of: (i) stability margins, (ii) controllability indices, (iii) observability indices, (iv) elements of an observability matrix, (v) elements of a controllability matrix, (vi) poles, and (vii) zeros of the dynamic model of the evolution of features over time.

14. The system (100) of any preceding claim, further comprising:

a real-time threat detection computer (150), coupled to the plurality of heterogeneous data source nodes (130), to:

(i) receive a series of current data source node (130) values and generate a set of current feature vectors based on the offline feature creation process,
(ii) access the abnormal state detection model (155) having the at least one decision boundary created offline, and
(iii) execute the abnormal state detection model (155) and transmit an abnormal state alert signal based on the set of current feature vectors and the at least one decision boundary.

**FIG. 1**

```
                                                            S210
┌──────────────────────────────────────────────────────────┐
│     Receive, By An Abnormal Space Detection Computer       │
│     Platform, A Plurality Of Real-Time Streams Of Data     │
│   Source Signal Values Over Time That Represent A Current   │
│          Operation Of The Electric Power Grid              │
└──────────────────────────────────────────────────────────┘
                              │
                              ▼                     S220
┌──────────────────────────────────────────────────────────┐
│            Generate Current Data Source Feature Vector      │
│            For Each Stream Of Data Source Signal Values     │
└──────────────────────────────────────────────────────────┘
                              │
                              ▼                     S230
┌──────────────────────────────────────────────────────────┐
│  Compare Each Current Feature Vector With A Corresponding   │
│  Decision Boundary For That Data Source, The Decision       │
│  Boundary Separating Normal From Abnormal States For That   │
│                      Data Source                           │
└──────────────────────────────────────────────────────────┘
                              │
                              ▼                     S240
┌──────────────────────────────────────────────────────────┐
│            Automatically Transmit Abnormal Alert Signal     │
│               Based On Results Of The Comparisons           │
└──────────────────────────────────────────────────────────┘
```

*FIG. 2*

FIG. 3

FIG. 4

**FIG. 5**

500

**OFFLINE** (*e.g.*, once every 5 to 8 hours) 510

Scenarios

Threat Points

MULTI-MODAL, MULTI-DISCIPLINARY FEATURE DISCOVERY 520

DATA GENERATION 522

LOADS

Data Samples

FEATURE ENGINEERING 532

DYNAMIC SYSTEM ID 534

FEATURE AUGMENTING 536

530

Feature Vectors

ANOMALY DECISION MODELING 540

NORMAL 542

TARGETED

RANDOM

544

DECISION BOUNDARY COMPUTATIONS 546

**REAL-TIME** 550

Sensor Data
Social Media
Wi-Fi Data
Weather Data
IT Inputs

PRE-PROCESSING 552

Data Samples

MULTI-MODAL, MULTI-DISCIPLINARY FEATURE EXTRACTION 560

FEATURE ENGINEERING 562

FEATURE AUGMENTING 564

Feature Vectors

DYNAMIC ANOMALY FORECASTING AND SITUATION AWARENESS 570

ANOMALY DECISION AND EVENT ASSESSMENT 580

NORMALITY DECISION-MAKING 582

Normal

Abnormal

EVENT ISOLATION, LOCALIZATION, AND IMPORTANCE ASSESSMENT 584

Spoof
System Event
Location
Importance

Early Warnings

**600**

**Inputs (Threat Points)**
Buses (with impedances)
Transmission Lines
Transformers
Generators
Loads
Shunts
Controlled VAR Devices
Power Electronic Devices
DC Buses
DC Lines

**POWER SYSTEM MODEL 622**

LOADS

ELECTRONIC

STATIC

**SYNTHETIC DATA COLLECTION 630**

*Virtual Sensors*
Current
Voltage
Reactive Power
Active Power
Others

**PRE-PROCESSING 650**

*Pre-Processing*
Re-sampling
Time Synch
Missing Data Checks
Others

**MULTI—MODAL, MULTI-DISCIPLINARY FEATURE DISCOVERY 660**

**FEATURE ENGINEERING 662**

*Analysis*
Batch Selection
Basis Vector Computation
Feature Extraction
Dimensionality Reduction

**ENGINEERED AND DYNAMIC SYSTEM FEATURE VECTORS 664**

**OPTIMAL FEATURES 672**

**SYSTEM IDENTIFICATION 674**

**DYNAMIC SYSTEM FEATURES 676**

**DATA SETS 640**

NORMAL 642

TARGETED
RANDOM
646

DECISION BOUNDARIES

*FIG. 6*

*FIG. 7*

FIG. 8

S910

Receive, From A Plurality Of Heterogeneous Data Source Nodes, A
Series Of Data Source Node Values Over Time Associated With
Operation Of The Electric Power Grid Control System

S920

Perform, By An Offline Abnormal State Detection Model Creation
Computer, A Feature Extraction Process Generate An Initial Set Of
Feature Vectors

S930

Perform Feature Selection With A Multi-Modal, Multi-Disciplinary
Framework To Generate Selected Feature Vector Subset

S940

Perform Feature Dimensionality Reduction Process To Generate
Selected Feature Vector Subset

S950

Automatically Calculate And Output At Least One Decision Boundary
For An Abnormal State Detection Model Based On The Selected
Feature Vector Subset

*FIG. 9*

*FIG. 10*

1100

| INPUT DEVICE 1140 | COMMUNICATION DEVICE 1120 | OUTPUT DEVICE 1150 |

PROCESSOR 1110

1130

| PROGRAM 1112 |

| ABNORMAL STATE DETECTION MODEL 1114 |

POWER GRID DATABASE 1200

DATA SOURCE DATABASE 1300

FEATURE VECTOR DATABASE 1400

*FIG. 11*

EP 3 373 552 A1

1200

| POWER GRID IDENTIFIER 1202 | COMPONENT IDENTIFIER 1204 | DESCRIPTION 1206 |
|---|---|---|
| PG_1001 | C_101 | TRANSFORMER |
| PG_1001 | C_102 | LOAD |
| PG_1001 | C_103 | GENERATOR |
| PG_1001 | C_104 | BUS |

**FIG. 12**

EP 3 373 552 A1

1300

| DATA SOURCE IDENTIFIER 1302 | TIME SERIES OF DATA VALUES 1304 | DESCRIPTION 1306 |
|---|---|---|
| DS_1001 | | SENSOR |
| DS_1001 | | WI-FI DATA |
| DS_1002 | | SENSOR |
| DS_1003 | | SOCIAL MEDIA |

*FIG. 13*

1400 ⟶

| POWER GRID IDENTIFIER 1402 | INITIAL FEATURE SET 1404 | SELECTED FEATURE SUBSET 1406 |
|---|---|---|
| PG_1001 | | |
| PG_1002 | | |

**FIG. 14**

EP 3 373 552 A1

ELECTRIC POWER GRID PROTECTION

- □ ×

ELECTRIC POWER GRID PROTECTION ▽

ELECTRIC POWER GRID PROTECTION – FEATURE VECTORS

INITIAL
FEATURE
SET

SELECTED
FEATURE
SUBSET

MULTI-MODAL,
MULTI-
DISCIPLINARY
FEATURE
DISCOVERY

FEATURE
DIMENSIONALITY
REDUCTION

1520

*FIG. 15*

Europäisches
Patentamt

European
Patent Office

Office européen
des brevets

# EUROPEAN SEARCH REPORT

Application Number

EP 18 16 0277

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2017/024649 A1 (YAN WEIZHONG [US] ET AL) 26 January 2017 (2017-01-26) <br> * abstract * <br> * paragraph [0001] - paragraph [0005] * <br> * paragraph [0020] - paragraph [0022]; figure 1A * <br> * paragraph [0023] - paragraph [0027]; figure 2 * <br> * paragraph [0028] - paragraph [0030]; figure 3 * <br> * paragraph [0031] - paragraph [0031]; figure 4 * <br> ----- | 1-14 | INV. <br> H04L29/06 <br><br> ADD. <br> G06N3/08 <br> G06N99/00 |
| A | WO 2014/144246 A1 (CYBERRICADE INC [US]; KOLACINSKI RICHARD M [US]; ANGELINE BARRY D [US]) 18 September 2014 (2014-09-18) <br> * abstract * <br> * paragraph [0008] - paragraph [0026] * <br> * column 24 - column 27 * <br> * paragraph [0035] - paragraph [0044] * <br> * paragraph [0045] - paragraph [0064] * <br> * paragraph [0138] - paragraph [0164] * <br> ----- | 1-14 | |
| A | US 7 225 343 B1 (HONIG ANDREW [US] ET AL) 29 May 2007 (2007-05-29) <br> * abstract * <br> * column 1 - column 4 * <br> * column 24 - column 27 * <br> ----- | 1-14 | TECHNICAL FIELDS SEARCHED (IPC) <br><br> G06N <br> H04L |

The present search report has been drawn up for all claims

| Place of search | Date of completion of the search | Examiner |
|---|---|---|
| Munich | 29 May 2018 | Jakob, Gregor |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

........................................................................

& : member of the same patent family, corresponding
document

EPO FORM 1503 03.82 (P04C01)

**ANNEX TO THE EUROPEAN SEARCH REPORT
ON EUROPEAN PATENT APPLICATION NO.**

EP 18 16 0277

This annex lists the patent family members relating to the patent documents cited in the above-mentioned European search report.
The members are as contained in the European Patent Office EDP file on
The European Patent Office is in no way liable for these particulars which are merely given for the purpose of information.

29-05-2018

| Patent document cited in search report | | | Publication date | Patent family member(s) | | Publication date |
|---|---|---|---|---|---|---|
| US 2017024649 | A1 | | 26-01-2017 | NONE | | |
| WO 2014144246 | A1 | | 18-09-2014 | US | 2015096026 A1 | 02-04-2015 |
| | | | | US | 2016253495 A1 | 01-09-2016 |
| | | | | US | 2017109524 A1 | 20-04-2017 |
| | | | | WO | 2014144246 A1 | 18-09-2014 |
| US 7225343 | B1 | | 29-05-2007 | US | 7225343 B1 | 29-05-2007 |
| | | | | US | 2007239999 A1 | 11-10-2007 |
| | | | | US | 2013031633 A1 | 31-01-2013 |
| | | | | US | 2015058994 A1 | 26-02-2015 |
| | | | | US | 2017034187 A1 | 02-02-2017 |

EPO FORM P0459

For more details about this annex : see Official Journal of the European Patent Office, No. 12/82